**Europäisches Patentamt**

**European Patent Office**

**Office européen des brevets**

(19)

(11) Veröffentlichungsnummer : **0 537 302 B1**

(12) ## EUROPÄISCHE PATENTSCHRIFT

(45) Veröffentlichungstag der Patentschrift :
**27.07.94 Patentblatt 94/30**

(51) Int. Cl.$^5$ : **G06F 9/44**

(21) Anmeldenummer : **91921015.3**

(22) Anmeldetag : **14.05.91**

(86) Internationale Anmeldenummer :
**PCT/DE91/00394**

(87) Internationale Veröffentlichungsnummer :
**WO 91/19251 12.12.91 Gazette 91/28**

(54) **VERFAHREN ZUR BEARBEITUNG EINES BENUTZERPROGRAMMS AUF EINEM PARALLELRECHNERSYSTEM.**

(30) Priorität : **05.06.90 DE 4018012**

(43) Veröffentlichungstag der Anmeldung :
**21.04.93 Patentblatt 93/16**

(45) Bekanntmachung des Hinweises auf die
Patenterteilung :
**27.07.94 Patentblatt 94/30**

(84) Benannte Vertragsstaaten :
**DE FR GB**

(56) Entgegenhaltungen :
**EP-A- 0 312 194**
**US-A- 4 177 510**
**Interfaces in Computing, Band 3, Nrs. 3/4, September-Dezember 1985, Elsevier Sequoia, (Lausanne, CH), K.W. Ng: "A kernel for distributed programming languages", Seiten 199-216**

(56) Entgegenhaltungen :
**Chip/Das Mikrocomputer Magazin + Supplement, Nr. 7, Juli 1987, (Würzburg, DE), K. Nieratschker: "VERSAdos/RMS68K: das Motorola-Betriebssystem für die 68000-Familie", Seiten 4-12**
**IEEE Software, Band 6, Nr. 4, 1989, (Los Alamitos, CA, US), B. Zorn et al.: "Multiprocessing extensions in spur lisp", Seiten 41-49**
**Proceedings on the 1985 International Conference on Parallel Processing, 20-23 August 1985, Washington, US, IEEE, R.H. Halstead et al.: "Exception handling in multilisp", Seiten 822-830**

(73) Patentinhaber : **SIEMENS AKTIENGESELLSCHAFT**
**Wittelsbacherplatz 2**
**D-80333 München (DE)**

(72) Erfinder : **GLAS, Brigitte**
**Rübezahlstrasse 66**
**D-8000 München 83 (DE)**
Erfinder : **KOLB, Dieter**
**Waldhornstrasse 65**
**D-8034 Germering (DE)**
Erfinder : **RADLHAMMER, Markus**
**Hirtenaschelweg 8**
**D-8000 München 70 (DE)**

## Beschreibung

Die Erfindung bezieht sich auf ein Verfahren zur Bearbeitung eines Benutzerprogramms auf einem Parallelrechnersystem.

Ein Benutzerprogramm kann zur Abarbeitung auf einem Parallelrechnersystem in mehrere Prozesse eingeteilt werden, die gleichzeitig auf mehreren Rechnern des Parallelrechnersystems bearbeitet weroen. Dabei kann sich die Situation ergeben, daß ein erster Prozeß auf einem Rechner des Parallelrechnersystems zur Ausführung das Ergebnis eines zweiten Prozesses benötigt, der auf einem anderen Rechner des Parallelrechnersystems bearbeitet wird und dessen Ergebnis noch nicht vorliegt. In diesem Fall muß eine Synchronisation zwischen den Prozessen stattfinden. Der eine Prozeß muß in einen Wartezustand übergehen und auf die Beendigung des anderen Prozesses warten. Liegt das Ergebnis des anderen Prozesses vor, so kann der eine Prozeß fortgesetzt werden (Interfaces in Computing, Bd.3, Nrs.3/4, Sept.-Dez.85,Lausanne CH,S.199-216,Elsevier Sequoia,NL.).

Ein Beispiel für eine derartige Bearbeitung eines Programmes liegt beim funktionalen Programmierstil vor, bei dem ein Programm sich aus ineinander geschachtelten Funktionsaufrufen zusammensetzt. Wenn ein derartiges Benutzerprogramm auf einem parallelen Datenverarbeitungssystem abläuft, können die einzelnen Funktionen in verschiedenen Prozessen ablaufen. Eine Funktion liefert ein Ergebnis, das einer anderen Funktion als Argument übergeben werden kann und dort weiterverarbeitet wird.

Funktionen werden anhand der Verwendung ihrer Argumente in zwei Arten unterteilt:

## Strikte Funktion

Eine Funktion ist strikt, wenn die Funktion einzelne Argumente wertmäßig zur Ausführung benötigt. Dies ist beispielsweise bei arithmetischen Operationen der Fall. Eine Addition kann nur dann durchgeführt werden, wenn alle Argumente, die addiert werden sollen, wertmäßig vorliegen.

## Nicht-strikte Funktion

Eine Funktion ist nicht-strikt, wenn die Werte aller Argumente zur Ausführung der Funktion nicht benötigt werden, d.h. die Argumente werden an die Funktion weitergereicht, ohne daß eine Betrachtung des Wertes durch die Funktion stattfindet. Nicht-strikte Operationen sind beispielsweise Zuweisungs- oder PUSH-Operationen.

Durch die parallele Abarbeitung von derartigen Funktionen kann sich die Situation ergeben, daß eine Funktion als Argument das Ergebnis einer anderen Funktion benötigt, die in einem anderen Prozeß auf einem anderen Rechner abläuft und noch nicht beendet ist. In diesem Fall ist eine Synchronisation notwendig. In parallelen Datenverarbeitungssystemen kann das Problem der Synchronisation von Funktionen je nach Art der Funktion folgendermaßen gelöst werden:

- Fall 1: Eine strikte Funktion benötigt als Argument das Ergebnis einer Funktion, die parallel zu der strikten Funktion abläuft.

   Da das strikte Argument von der Funktion wertmäßig benötigt wird, muß in diesem Fall eine Synchronisation zwischen den Funktionen stattfinden, d.h. die strikte Funktion muß die Berechnung des Argumentes abwarten.
- Fall 2: Eine nicht-strikte Funktion hat als Argument das Ergebnis einer Funktion, die parallel zu der nicht-strikten Funktion abläuft.

Da die nicht-strikte Funktion das Argument nicht wertmäßig benötigt, kann hierfür z.B. das Konzept der Platzhalter eingeführt werden (Halstead,R: "Multilisp: A Language for Concurrent Symbolic Computation", ACM Transactions on Programming Languages and Systems, October 1985). Mit diesen Platzhaltern kann gearbeitet werden als wären sie das Ergebnis des parallelen Prozesses. Der Platzhalter wird dabei anstelle des Arguments für die Ausführung der nichtstrikten Funktion benützt. So kann beispielsweise eine PUSH-Operation unter Verwendung eines Platzhalters anstelle des eigentlichen Wertes ausgeführt werden. Durch dieses Konzept wäre die Synchronisation auf den Zeitpunkt der ersten strikten Verwendung des Ergebnisses verschoben. Somit kann man bei der nicht-strikten Verwendung von Daten auf eine Synchronisation verzichten und das parallele Datenverarbeitungssystem besser ausnutzen.

Das Konzept der Platzhalter muß bei der Ausführung von strikten Operationen berücksichtigt werden. Beim Aufruf einer Funktion kann ein Argument in drei verschiedenen Zuständen vorliegen:

- Der Wert des Arguments ist normal abgespeichert, so daß auf das Datum direkt zugegriffen werden kann. Die strikte Operation kann ausgeführt werden.
- Anstelle des Argumentes existiert ein Platzhalter, der auf das eigentliche Ergebnis verweist. Das Ergebnis steht in einer Ergebniszelle. Wenn die Ergebniszelle das Datum bereits enthält, dann kann über den Platzhalter auf dieses Datum mit einem zusätzlichen Speicherzugriff zugegriffen werden. Danach kann die strikte Operation ausgeführt werden.

- Es existiert ein Platzhalter, also auch eine Ergebniszelle, die Jedoch noch kein Ergebnis enthält. Der Prozeß, der das Ergebnis berechnen soll, ist noch aktiv. In diesem Fall muß eine Synchronisation erfolgen, d.h. die strikte Operation muß auf die Beendigung des Prozesses und die Bereitsstellung des Ergebnisses in der Ergebniszelle warten.

Diese drei möglichen Zustände eines Argumentes bedürfen einer unterschiedlichen Behandlung. Moderne funktionale Sprachkonzepte zur Parallelverarbeitung, wie z.B. Multilisp, die eine transparente Verarbeitung der Ergebnisse von Prozessen erlauben, befreien den Programmentwickler von der expliziten Behandlung der verschiedenen Argumentzustände. Dadurch jedoch ist der vorliegende Zustand statisch, d.h. zum Übersetzungszeitpunkt des Benutzerprogramms in der Regel nicht entscheidbar. Somit muß die Fallunterscheidung zur Laufzeit des Benutzerprogramms bei jedem Datenzugriff einer strikten Operation auf ihre strikten Argumente durchgeführt werden.

Die der Erfindung zugrundeliegende Aufgabe besteht darin, ein Verfahren für die effiziente Überprüfung von strikten Argumenten bei einer funktionalen Programmiersprache anzugeben, das auf Parallelrechnern mit Standardprozessoren anwendbar ist. Ziel der Erfindung ist es, eine zeit- und speicherplatzeffiziente transparente Verarbeitung der Ergebnisse von parallelen Prozessen zu ermöglichen.

Diese Aufgabe wird bei einem Verfahren der obenangegebenen Art gemäß den in Patentanspruch 1 angegebenen Schritten gelöst.

Der Vorteil des erfindungsgemäßen Verfahrens besteht darin, daß die statische Programmlänge gegenüber dem nicht-parallelen Fall nicht vergrößert wird, wobei sowohl Zugriffe auf normale Daten als auch auf Ergebniszellen korrekt behandelt werden. Damit werden je Zugriff nach Übersetzung des Benutzerprogramms Befehle eingespart. Zudem wird die Programmlaufzeit beim Zugriff auf normale Daten gegenüber dem nicht-parallelen Fall nicht verlängert.

Andere Weiterbildungen der Erfindung ergeben sich aus den Unteransprüchen.

Anhand von Ausführungsbeispielen wird die Erfindung weiter erläutert. Dabei wird als Beispiel ein Programmausschnitt aus einem Lisp Programm herangezogen, und zwar wird ein Pseudocode zur Erläuterung verwendet.

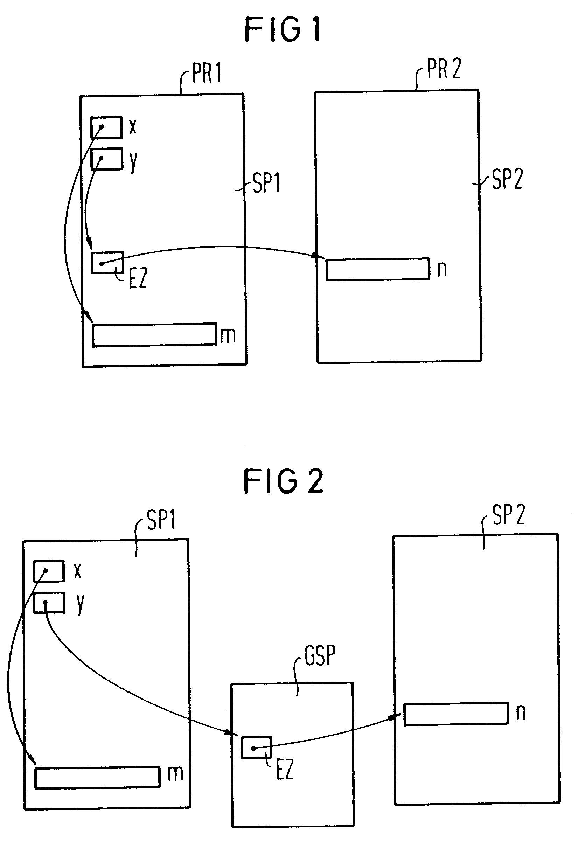

Mit Hilfe der Figur 1 soll zunächst dargestellt werden, wie die Lösung des Problems ohne das erfinderische Verfahren aussieht. Bei der Erzeugung paralleler Prozesse werden Platzhalter, also die sog. Ergebniszellen EZ angelegt, die bei Beendigung des Prozesses dessen Ergebnis aufnehmen. Diese Ergebniszellen EZ können in nicht-strikten Operationen wie normale Daten benutzt werden. Insbesondere können sie anderen Funktionen als Argument übergeben werden.

In Figur 1 sind zwei Prozesse dargestellt, die parallel zueinander ablaufen. Ein erster Prozeß ist mit PR1 bezeichnet, ein zweiter Prozeß mit PR2. Beide Prozesse PR1 und PR2 sind Teil eines Benutzerprogramms, das parallel abgearbeitet wird. Der Prozeß PR1 weist Befehle auf, die einen Speicherzugriff auf einen Speicher enthalten. Zum Beispiel soll mit einem solchen Befehl auf eine Variable x zugegriffen werden, die im Speicherbereich SP1 des Prozesses PR1 gespeichert ist. Der Wert der Variablen x sei im Ausführungsbeispiel im Speicherbereich SP1 für den Prozeß PR1 enthalten und ist mit Vektor m bezeichnet. Ein Befehl kann auch auf eine Variable y zugreifen, die ihrerseits einen Platzhalter enthält. Dieser Platzhalter ist als Ergebniszelle EZ angegeben, in der der Wert der Variablen y enthalten sein kann. Der Wert wird vom Prozeß PR2 geliefert und ist als Vektor n im Speicherbereich SP2 des Prozesses PR2 angegeben.

Einer strikten Operation können normale Daten, wie z.B. die Variable x, als auch Platzhalter, wie z.B. die Variable y, als Argumente übergeben werden. Da zur Übersetzungszeit des Benutzerprogramms in der Regel nicht zwischen den beiden Fällen unterschieden werden kann, müssen in parallelen Systemen zur Laufzeit des Programms entsprechende Überprüfungen durchgeführt werden. Diese Überprüfungen sowie die Behandlung der Platzhalter EZ sind bei jedem Datenzugriff einer strikten Operation auf ihre strikten Argumente erforderlich. Damit ist ein nicht unerheblicher Mehraufwand gegenüber der nicht-parallelen Verarbeitung verbunden. Dieser Mehraufwand ist umso störender, da im dynamischen Ablauf eines Programms nur zu einem sehr geringen Anteil Platzhalter als Argumente von strikten Operationen auftreten.

Durch die Überprüfung der Argumente zur Laufzeit und die entsprechende Behandlung der Ergebniszellen EZ einschließlich der Synchronisation der Prozesse wird für jeden Datenzugriff auf strikte Argumente der Programmcode aufgebläht. Die bei jedem Zugriff zusätzlich zu durchlaufenden Befehle zur Datenüberprüfung verlängern außerdem die Prozeßlaufzeit gegenüber dem nicht-parallelen Fall. Beides zusammen führt zu einer Reduzierung des Effizienzgewinns, der durch die Parallelität und die möglichst späte Synchronisation erzielt wird.

Am Beispiel der funktionalen Programmiersprache Lisp wird diese Realisierung und der daraus entstehende Aufwand genauer erläutert. In Lisp werden die Platzhalter für die Referenz auf ein parallel berechnetes Ergebnis als Objekte vom Datentyp "future" dargestellt.

Um das erste Element einer Liste x zu erhalten, wird in Lisp die strikte Operation (car x) verwendet. Hierfür werden vom Compiler im nicht-parallelen Fall die folgenden im Pseudocode dargestellten Anweisungen erzeugt:

```
Tabelle 1


...
loadvar      x, r₁                      B1
load         car (r₁), r₂               B2
...
```

In einem ersten Befehl B1 wird der Wert der Variablen x in das Register R1 geladen. Dieser Wert von x ist ein Zeiger auf den Anfang der Liste. In einem zweiten Befehl B2 wird dann der Inhalt des Speicherplatzes, auf den das Register R1 zeigt, in das Register R2 übernommen.

Da der Befehl car eine strikte Operation ist, muß im parallen Fall vor dem Zugriff auf das erste Element der Liste, d.h. vor dem Ausführen des load Befehls, geprüft werden, ob der Wert von x ein normales Datum oder eine Ergebniszelle, d.h. ein Objekt vom Typ "future" ist. Hierdurch sind im parallelen Fall die folgenden als Pseudocode dargestellten Anweisungen für die gleiche Operation erforderlich:

```
Tabelle 2


        ...
        loadvar    x,r₁                      B1
tag1    chktype    r₁, future        +*      B3
        bne        tag3              +*      B4
        load       status(r₁),r2      *      B5
        compare    r₂, computed       *      B6
        be         tag2               *      B7
        wait       r₁                 *      B8
tag2    load       value(r₁),r₁     *        B9
        b          tag1             *        B10
tag3    load       car(r₁),r₂               B2
```

Nach dem Befehl B1 wird in einem Befehl B3 überprüft, ob der Inhalt von Register R, vom Datentyp "future" ist. Ist dies nicht der Fall (siehe Befehl B4; bne = Verzweigung bei Ungleichheit), dann liegt ein normales Datum vor und der weitere Programmablauf erfolgt wie im nicht-parallelen Ablauf mit dem Befehl B2 (tag3). Ist jedoch der Datentyp "future" festgestellt worden, d.h. Register R1 zeigt auf eine Ergebniszelle, dann wird der Befehl B5 ausgeführt und der Status der Ergebniszelle im Register R1 in das Register R2 geladen. Mit dem Befehl B6 wird festgestellt, ob der Status im Register R2 so ist, daß das Ergebnis bereits in der Ergebniszelle EZ vorhanden ist. Dies wird mit "computed" angegeben. Ist dies nicht der Fall, dann wird entsprechend Befehl B8 (be = Verzweigung bei Gleichheit) gewartet bis das Ergebnis in der Ergebniszelle vorliegt. Liegt das Ergebnis bereits vor, dann wird entsprechend Befehl B7 zu Befehl B9 (tag2) gesprungen und der Inhalt des Registers R1 durch den Inhalt der Ergebniszelle ersetzt. Anschließend wird entsprechend Befehl B10 (b = Sprung) wieder zum Befehl B3 zurückgesprungen (tag1) und die ganze Prozedur noch einmal durchgeführt,und zwar solange, bis der Inhalt von Register R1 nicht mehr vom Datentyp "future" ist. Erst dann wird entsprechend Befehl B2 weiter gearbeitet.

Gegenüber dem nicht-parallelen Fall wird somit im parallen Fall das Coding für den Zugriff auf ein striktes Argument um 8 mit * gekennzeichnete Pseudocodeanweisungen vergrößert und es wächst damit von zwei auf zehn Anweisungen oder um den Faktor 5. Von diesen zusätzlichen acht Anweisungen werden die zwei mit + gekennzeichneten bei jedem Zugriff, auch dem auf normale Daten, zusätzlich durchlaufen; die übrigen sechs Anweisungen nur, wenn x eine Ergebniszelle ist und synchronisiert werden muß. Die Anzahl der zu durchlaufenen Anweisungen wächst somit um mindestens zwei oder steigt mindestens um den Faktor zwei gegenüber dem nicht-parallelen Fall.

Gegenüber diesem Verfahren geht das erfindungsgemäße Verfahren entsprechend Figur 2 vor. Dabei wird der Normalfall, bei dem der Wert des Argumentes vorliegt und ein normales Datum ist, ohne zusätzliche Befehle abgewickelt. Um dies zu erreichchen werden die Platzhalter, also die Ergebniszellen, in einen speziellen Speicherbereich gelegt, der für das Benutzerprogramm, das im Benutzermodus abläuft, nicht zugänglich ist. Dieser Speicherbereich sei mit GSP, gesperrter Speicherbereich, bezeichnet. Die beiden Prozesse PR1 und PR2 arbeiten wie in Figur 1 über die Speicherbereiche SP1 und SP2, der Prozeß PR1 im Speicherbereich SP1, der Prozeß PR2 im Speicherbereich SP2. Wird nun bei der Bearbeitung des Prozesses PR1 ein Speicherzugriff ausgeführt, der auf eine Ergebniszelle EZ im gesperrten Bereich GSP zeigt, dann wird systemseitig eine Unterbrechung erzeugt. Diese Unterbrechung wird durch eine nachfolgende Unterbrechungsroutine abgefangen, die im Systemmodus abläuft und den Zugriff auf die Ergebniszelle EZ im gesperrten Bereich GSP ermöglicht. Da diese Ausnahmebehandlung wie ein Programmfehler behandelt wird, ist kein zusätzliches Coding erforderlich. Die Programmlänge wird gegenüber dem nichtparallelen Fall nicht vergrößert. Im Normalfall sind auch keine zusätzlichen Befehle zu durchlaufen.

Die Überprüfung, ob ein angesprochener Speicherbereich für das Benutzerprogramm zugänglich ist oder nicht, erfolgt systemseitig bei jeder Speicheroperation. Hierdurch entsteht somit kein zusätzlicher Aufwand, vielmehr wird diese Systemeigenschaft für die Lösung des Problems ausgenutzt. Bei Verletzung der Speicherzugriffsberechtigung wird dann hardwaremäßig eine Unterbrechung erzeugt, die vom Betriebssystem bearbeitet wird. Die Unterbrechungsanalyse des Betriebssystems erkennt die Art des Fehlers und verzweigt in die bereitgestellte Unterbrechungsroutine.

Die Unterbrechungsroutine, die bei jedem Zugriff auf einen Platzhalter durchlaufen wird, prüft, ob das Ergebnis des parallelen Prozesses bereits vorliegt. Im positiven Fall wird der Verweis auf den Platzhalter durch einen Verweis auf das Ergebnis ersetzt, die Unterbrechung beendet und der unterbrochene Zugriff erneut ausgeführt. Liegt das Ergebnis jedoch nicht vor, so bleibt der unterbrochene Prozeß solange suspendiert, bis der andere Prozeß beendet und sein Ergebnis verfügbar ist. Durch die erneute Ausführung des unterbrochenen Zugriffs werden auch verkettete Ergebniszellen korrekt behandelt.

Das Eintragen des Prozeßergebnisses in die Ergebniszelle EZ erfolgt bei der Beendigung des Prozesses PR2. Da der Platzhalter nur im Systemmodus erreichbar ist, bieten sich hierfür abhängig von dem realisierten Prozeßkonzept, zwei Alternativen an:

- Das Ergebnis soll durch eine explizite Abspeicherungsoperation des sich beendenden Prozesses in dem Platzhalter abgelegt werden:
  Der sich beendende Prozeß läuft im Benutzermodus ab. Deshalb erfolgt eine Unterbrechung wie beim lesenden Zugriff auf den Platzhalter. Diese kann ebenfalls durch eine Unterbrechungsroutine abgefangeh werden, die im Systemmodus abläuft und den Wert in dem Platzhalter abspeichern kann.
- Die Abspeicherung des Ergebnisses soll implizit von der Prozeßbeendigungsroutine durchgeführt werden:
  Diese Routine, die als letztes von dem sich beendenden Prozeß PR2 angestoßen wird, erhält das Prozeßergebnis als Argument. Da diese Routine im Systemmodus abläuft, hat sie Zugriff auf den Platzhalter und kann, ohne daß eine Unterbrechung erzeugt wird, das Ergebnis dort ablegen.

Wichtig ist, daß die Ergebniszellen in einem für das Benutzerprogramm gesperrten Speicherbereich liegen. Dieser gesperrte Speicherbereich ist nur im Systemmodus zugänglich, jedoch nicht im Benutzermodus. Wenn im Benutzermodus ein Zugriff auf den gesperrten Speicherbereich GSP erfolgt, dann wird dies vom Betriebssystem wie ein Fehler interpretiert und das laufende Programm unterbrochen, um den Fehler festzustellen. Bei der Fehlerfeststellung erkennt das Betriebssystem, daß hier ein Zugriff auf eine Ergebniszelle EZ vorliegt, und damit stößt das Betriebssystem die obenangegebene Unterbrechungsroutine an. Diese Routine führt die Synchronisation mit dem anderen Prozeß durch und löst die Übergabe des Datums in der Ergebniszelle EZ zum Prozeß PR1 hin aus. Die Unterbrechungsroutine hat Zugriff auf den gesperrten Speicherbereich, da sie im Systemmodus abläuft.

Stellt die Unterbrechungsroutine fest, daß das Ergebnis in der Ergebniszelle EZ bereits vorliegt, dann wird der Zugriffspfad umgelenkt und der suspendierte Prozeß PR1 wird mit einer erneuten Ausführung des abgebrochenen Zugriffs reaktiviert. Im anderen Fall wird der noch arbeitende Prozeß PR2 darüber informiert, daß der Prozeß PR1 auf sein Ergebnis wartet. Der Prozeß PR1 bleibt suspendiert und wird erst bei Beendigung des Prozesses PR2 reaktiviert.

Durch die Verlagerung der Erkennung und Behandlung des Zugriffs auf Ergebniszellen auf die Hardware und das Betriebssystem bleibt das Coding des Benutzerprogramms gegenüber dem nicht-parallelen Fall unverändert. Es werden somit im Normalfall keine zusätzlichen Befehle durchlaufen. Das wird in der nachfolgenden Tabelle 3 noch einmal gezeigt:

Tabelle 3

```
               Benutzerprogramm
               (Benutzermodus)
   ...
   loadvar   x, r₁
   load      car (r₁), r₂  B2                 Unterbrechungsroutine
   ...                                             TR
                                          load      status (r₁),r₀   B5'
                                          compare   r₀, computed     B6'
                                          be        tag₁             B7'
                                          wait      r₁               B8'
                                  tag₁    load      value (r₁),r₁    B9'
                                          return-from-trap           B10'
```

Bei der Ausführung des Befehles B2 wird festgestellt, daß hier ein Zugriff auf eine Ergebniszelle in einem gesperrten Speicherbereich GSP erfolgt. Damit wird das Betriebssystem tätig, stellt den Grund des Zugriffs auf den gesperrten Speicherbereich fest und startet die Unterbrechungsroutine TR. Die Befehle B5'-B9' der Unterbrechungsroutine im Pseudocode nach Tabelle 3 entsprechen den Befehlen B5 bis B9, die oben bereits besprochen worden sind. Nach dem Ablauf der Unterbrechungsroutine TR wird mit dem Befehl B10' wieder zu dem Befehl B2 zurückgekehrt und dieser noch einmal ausgeführt. Sollte im Befehl B2 noch immer ein Zugriff auf eine Ergebniszelle erfolgen, dann wird derselbe Vorgang wiederholt, und zwar solange, bis der Befehl keinen Zugriff zu einer Ergebniszelle mehr bewirkt.

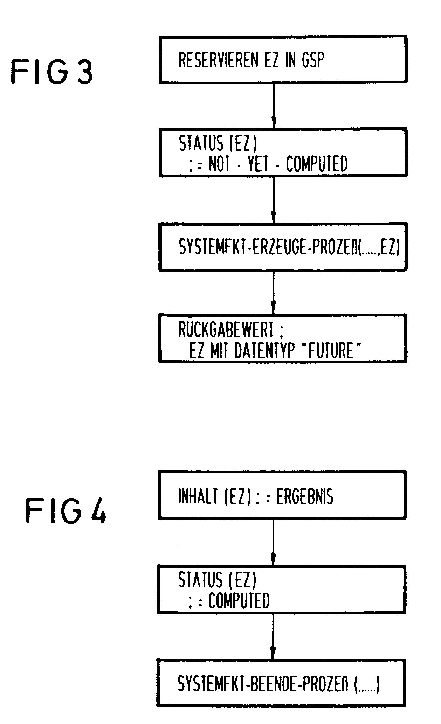

Figur 3 beschreibt das Erzeugen von Ergebniszellen EZ. Ergebniszellen EZ werden vom Prozeß PR1 beim Start eines Prozesses PR2 im gesperrten Speicherbereich GSP angelegt. Sie erhalten die Statusinformation "not-yet-computed". Anschließend wird durch eine Systemfunktion der Prozeß PR2 gestartet. Die Adresse der Ergebniszelle, gekennzeichnet mit dem Datentyp "future", wird im Prozeß PR1 von der Prozeßerzeugungsfunktion zurückgegeben und als Platzhalter für das Ergebnis von PR2 weiter benutzt.

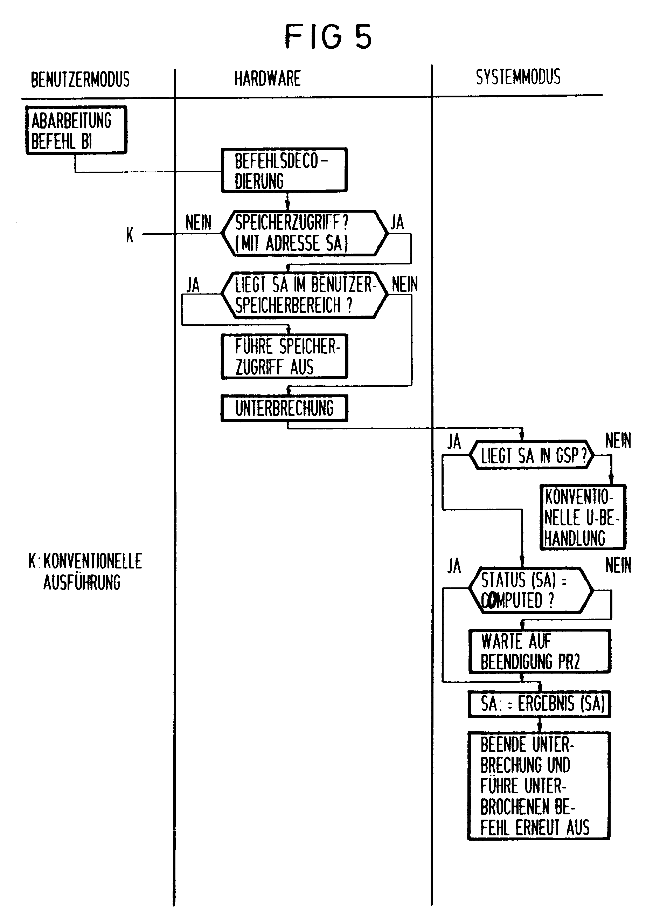

Figur 4 beschreibt die Abspeicherung des Ergebnisses von Prozeß PR2 in der Ergebniszelle EZ. Diese Operation erfolgt bei der Beendigung von Prozeß PR2.

Das Ergebnis von Prozeß PR2 wird in die Ergebniszelle EZ abgespeichert. Der Status der Ergebniszelle EZ wird auf "computed" geändert. Weitere Systemoperationen zur Beendigung des Prozesses werden anschließend durchgeführt.

Figur 5 beschreibt den Zugriff eines Benutzerprogramms auf Daten, die indirekt über eine Ergebniszelle EZ erreicht werden. Im Prozeß PR1 werden in der üblichen Weise Befehle Bi nacheinander abgearbeitet. Bei der Bearbeitung der Befehle durch die Hardware werden bei der Befehlsdecodierung Speicherzugriffe erkannt. Dabei wird geprüft, ob ein Zugriff auf eine Speicheradresse SA im gültigen Speicherbereich des Benutzerprogramms liegt. Ist dies nicht der Fall, wird hardwareseitig eine entsprechende Unterbrechung ausgelöst. Dieses Phänomen wird für die Erkennung von Ergebniszellen EZ zur Laufzeit ausgenutzt (EP-A-0 312 194).

Stellt die Analyse der Unterbrechung fest, daß ein Zugriff an einem gesperrten Speicherbereich GSP vorliegt, der für Ergebniszellen EZ reserviert wurde, so wird nach der speziellen Unterbrechungsroutine TR verfahren. Ansonsten erfolgt die konventionelle Unterbrechungsbehandlung.

Die Unterbrechungsroutine TR prüft, ob die Berechnung durch den Prozeß PR2 bereits abgeschlossen ist, d.h. ob die Statusinformation der EZ "computed" ist. Ist dies nicht der Fall, so wird der Prozeß PR1 solange angehalten, bis der Prozeß PR2 beendet ist.

Wenn das Ergebnis vorliegt, wird die die Unterbrechung verursachende Speicheradresse SA ersetzt durch das Ergebnis von Prozeß PR2, das aus der Ergebniszelle EZ gewonnen wird, so daß bei einer erneuten Ausführung des unterbrochenen Befehls ein Speicherzugriff auf das Ergebnis von PR2 erfolgt.

Die Vorteile des erfindungsgemäßen Verfahrens liegen in folgenden Punkten:

Gegenüber der nicht erfindungsgemäßen Lösung werden bei der Programmlänge je Zugriff auf Daten Befehle in der Größenordnung von 10 eingespart.

Beim Zugriff auf normale Daten wird die Programmlaufzeit gegenüber dem nicht-parallelen Fall nicht verlängert. Hierdurch werden gegenüber der Lösung nach Figur 1 pro Zugriff zwei Befehle eingespart.

Beim Zugriff auf Ergebniszellen verlängert sich die Laufzeit um die Zeit für die Unterbrechungsanalyse und die Zeit der Unterbrechungsroutine. Die Anzahl der Befehle, die in der Unterbrechungsroutine zur Behandlung der Ergebniszelle zu durchlaufen sind, ist vergleichbar denen der Lösung gemäß Figur 1.

In typischen Lisp Programmen kommt im nicht-parallelen Fall ein Speicherzugriff auf ca. 10 Befehle. In der bisherigen Lösung waren für einen Speicherzugriff im parallelen Fall ca.

10 Befehle zusätzlich notwendig. Hierdurch wurde die statische Programmgröße verdoppelt. Die Einsparung durch die Erfindung reduziert somit die programmlänge um 50%.

Bei der Programmlaufzeit werden bei jedem Speicherzugriff ca. 2 Befehle eingespart. Damit ergibt sich eine anwendungsabhängige Verkürzung der Programmlaufzeit von ca. 20%.

## Patentansprüche

1. Verfahren zur Bearbeitung eines Benutzerprogramms auf einem Parallelrechnersystem mit folgenden Schritten:
   - einzelne Prozesse (PR) des Benutzerprogramms werden auf verschiedenen Rechnern bearbeitet:
   - jeder aktive Prozeß kann weitere Prozesse erzeugen, die Teile des Benutzerprogramms unabhängig voneinander bearbeiten, und
   gekennzeichnet durch die weiteren Schritte:
   - bei der Erzeugung eines Prozesses wird für diesen Prozeß eine Ergebniszelle (EZ) im für das Benutzerprogramm gesperrten Bereich (GSP) des Speichers angelegt,
   - wird bei Ausführung eines ersten Prozesses im Benutzermodus ein Speicherzugriff ausgeführt, der auf eine Ergebniszelle im gesperrten Speicherbereich (GSP) zeigt, dann wird eine Unterbrechung erzeugt, die eine Unterbrechungsroutine im Systemmodus ablaufen läßt, welche den Zugriff auf die Ergebniszelle ermöglicht und prüft, ob das Ergebnis eines parallelen zweiten Prozesses bereits vorliegt und wenn dies nicht der Fall ist, den unterbrochenen Prozeß solange suspendiert, bis die Ergebnisdaten verfügbar sind.

2. Verfahren nach Anspruch 1, bei dem nach Unterbrechung zur Synchronisation die Unterbrechungsroutine angestoßen wird und dabei festgestellt wird, ob die Daten schon in der Ergebniszelle (EZ) enthalten sind und für diesen Fall die Daten zur Verfügung gestellt werden und der Befehl ausgeführt wird, sonst die Unterbrechung aufrechterhalten wird, bis das Ergebnis des anderen Prozesses in der Ergebniszelle (EZ) eingetragen worden ist und dann erst die Ausführung des Befehls mit den Daten der Ergebniszelle begonnen wird.

3. Verfahren nach Anspruch 2, bei dem bei Beendigung des zweiten Prozesses (PR2) dessen Ergebnis in die Ergebniszelle eingetragen wird.

## Claims

1. Method for processing a user program on a parallel computer system with the following steps:
   - individual processes (PR) of the user program are processed on different processors:
   - each active process can generate further processes that process parts of the user program independently of one another, and characterized by the further steps:
- during the generation of a process a result cell (EZ) is created for said process in the area (GSP) of the memory which is locked for the user program,
- if a memory access which points to a result cell in the locked memory area (GSP) is executed during the execution of a first process in the user mode, then an interrupt is generated which causes an interrupt routine to run in the system mode which permits the access to the result cell and checks whether the result of a parallel second process is already available, and if this is not the case suspends the interrupted process until the result data are available.

2.    Method according to Claim 1, in which after interruption for synchronization the interrupt routine is initiated and it is determined thereby whether the data are already contained in the result cell (EZ), and in this case the data are made available and the instruction is executed; otherwise the interrupt is maintained until the result of the other process has been entered in the result cell (EZ) and only then does the execution of the instruction commence with the data of the result cell.

3.    Method according to Claim 2, in which upon termination of the second process (PR2), its result is entered in the result cell.

**Revendications**

1.    Procédé de traitement d'un programme d'utilisateur dans un système à ordinateurs parallèles, comportant les étapes suivantes :
- des processus (PR) individuels du programme d'utilisateur sont traités dans différents ordinateurs;
- chaque processus actif peut produire d'autres processus, qui traitent, indépendamment les uns des autres, des parties du programme d'utilisateur; et

caractérisé par les étapes suivantes :
- lors de la production d'un processus, une cellule (EZ) de résultat est placée, pour ce processus, dans la zone (GSP) de la mémoire, à laquelle ne peut accéder le programme d'utilisateur,
- si lors de l'exécution d'un premier processus en mode utilisateur, on effectue un accès en mémoire, qui adresse une cellule de résultat dans la zone (GSP) de mémoire à laquelle ne peut accéder le programme d'utilisateur, une interruption est produite, qui permet l'exécution en mode système, d'une routine d'interruption, laquelle permet d'accéder à la cellule de résultat et vérifie que le résultat d'un second processus parallèle est déjà disponible et, si ce n'est pas le cas, suspend le processus interrompu jusqu'à ce que les données de résultat soient disponibles.

2.    Procédé suivant la revendication 1, dans lequel, après interruption, on obtient la routine d'interruption pour la synchronisation et on détermine ainsi, si les données se trouvent déjà dans la cellule (EZ) de résultat et, dans l'affirmative, les données sont disponibles et l'instruction est exécutée, alors que, sinon, l'interruption est maintenue jusqu'à ce que le résultat de l'autre processus ait été introduit dans la cellule (EZ) de résultat et on commence ensuite seulement l'exécution de l'instruction avec les données de la cellule de résultat.

3.    Procédé suivant la revendication 2, dans lequel, après achèvement du second processus (PR2), le résultat de ce processus est introduit dans la cellule de résultat.

# FIG 1

# FIG 2

FIG 3

RESERVIEREN EZ IN GSP

STATUS (EZ)
: = NOT - YET - COMPUTED

SYSTEMFKT-ERZEUGE-PROZEß(......EZ)

RUCKGABEWERT :
EZ MIT DATENTYP "FUTURE"

FIG 4

INHALT (EZ) : = ERGEBNIS

STATUS (EZ)
: = COMPUTED

SYSTEMFKT-BEENDE-PROZEß (......)

# FIG 5

| BENUTZERMODUS | HARDWARE | SYSTEMMODUS |
|---|---|---|

ABARBEITUNG
BEFEHL BI

BEFEHLSDECO-
DIERUNG

NEIN — SPEICHERZUGRIFF? (MIT ADRESSE SA) — JA

K

JA — LIEGT SA IM BENUTZER-SPEICHERBEREICH? — NEIN

FÜHRE SPEICHER-ZUGRIFF AUS

UNTERBRECHUNG

JA — LIEGT SA IN GSP? — NEIN

KONVENTIO-NELLE U-BE-HANDLUNG

K: KONVENTIONELLE
   AUSFÜHRUNG

JA — STATUS (SA) = COMPUTED? — NEIN

WARTE AUF
BEENDIGUNG PR2

SA: = ERGEBNIS (SA)

BEENDE UNTER-BRECHUNG UND FÜHRE UNTER-BROCHENEN BE-FEHL ERNEUT AUS